# EUROPÄISCHE PATENTSCHRIFT

(11) **EP 3 621 178 B1**
(45) Veröffentlichungstag und Bekanntmachung des Hinweises auf die Patenterteilung: **14.04.2021**
(21) Anmeldenummer: 19195186.2
(22) Anmeldetag: 03.09.2019
(51) Int. Cl.: H02J 50/05, H02M 3/335, H02M 1/08, H02M 3/338, H02M 7/5383, H02M 7/538, H02M 3/00, H02M 7/48, H02M 1/00

(54) **WECHSELSPANNUNGSVERSORGUNGSEINRICHTUNG**
AC POWER SUPPLY DEVICE
DISPOSITIF D'ALIMENTATION EN TENSION ALTERNATIVE

(30) Priorität: 05.09.2018 DE 102018215097
(43) Veröffentlichungstag der Anmeldung: 11.03.2020
(73) Patentinhaber: FRAUNHOFER-GESELLSCHAFT zur Förderung der angewandten Forschung e.V., 80686 München (DE)
(72) Erfinder: Hoene, Eckart, 13465 Berlin (DE)
(74) Vertreter: Stöckeler, Ferdinand

(56) Entgegenhaltungen:
- WO-A2-2014/067915
- DE-A1-102015 009 797
- US-A1- 2017 012 535

## Beschreibung

Die Erfindung betrifft eine Wechselspannungsversorgungseinrichtung zum Umwandeln einer energieliefernden Gleichspannung in eine erste Wechselspannung und in eine von der ersten Wechselspannung galvanisch getrennte zweite Wechselspannung. Weiterhin betrifft eine vorteilhafte Ausgestaltung der Erfindung eine Gleichspannungsversorgungseinrichtung zum

Umwandeln einer energieliefernden Gleichspannung in eine erste Gleichspannung und in eine von der ersten Gleichspannung galvanisch getrennte zweite Gleichspannung. Darüber hinaus betrifft eine vorteilhafte Ausgestaltung der Erfindung eine Treiberschaltung zum Ansteuern eines ersten Leistungshalbleiters und eines zweiten Leistungshalbleiters, welche in Reihe geschaltet sind. Ebenso betrifft eine vorteilhafte Ausgestaltung der Erfindung eine Leistungshalbleiterschaltung mit einem ersten Leistungshalbleiter, mit einem zweiten Leistungshalbleiter und mit einer Treiberschaltung.

In der Elektronik wird in zahlreichen Anwendungen eine galvanisch getrennte Signal- und Energieübertragung vorausgesetzt. Insbesondere die Ansteuerung von in Serie geschalteten Halbleiterschaltern innerhalb leistungselektronischer Anwendungen macht eine galvanische Trennung der Steuersignale unverzichtbar. Bekannte Lösungen beruhen dabei auf dem Transformatorprinzip. Dabei wird die galvanische Trennung zweier Steuersignale durch zwei elektromagnetisch verkoppelte Windungen, also durch einen Transformator, realisiert. Transformatoren sind jedoch aufwändig in der Herstellung und daher teuer. Darüber hinaus nehmen Transformatoren einen großen Bauraum ein D1 (US 2017/012535 A1) offenbart in Figur 4 in Verbindung mit Figur 13 eine Wechselspannungsversorgungseinrichtung zum Umwandeln einer energieliefernden Gleichspannung in eine erste Wechselspannung und in eine von der ersten Wechselspannung galvanisch getrennte zweite Wechselspannung wobei die Wechselspannungsversorgungseinrichtung umfasst: einen ersten Spannungseingang und einen zweiten Spannungseingang zum Empfangen der energieliefernden Gleichspannung; ein der ersten Wechselspannung zugeordnetes zweites kapazitives Resonanzelement der Wechselspannungsversorgungseinrichtung mit einem ersten Kontakt sowie ein der zweiten Wechselspannung zugeordnetes zweites kapazitives Resonanzelement der Wechselspannungsversorgungseinrichtung mit einem ersten Kontakt.

D2 (WO 2014/067915 A2) offenbart einen Halbleiterschalter mit einem ersten Schaltkontakt, einem zweiten Schaltkontakt und einem Steuerkontakt, wobei der zweite Schaltkontakt mit dem zweiten Spannungseingang elektrisch verbunden ist; ein induktives Eingangselement, welches den ersten Spannungseingang und den ersten Schaltkontakt elektrisch verbindet; der erste Kontakt des der ersten Wechselspannung zugeordneten zweiten kapazitiven Resonanzelements ist mit dem zweiten Schaltkontakt elektrisch verbunden; der erste Kontakt des der zweiten Wechselspannung zugeordneten zweiten kapazitiven Resonanzelements ist mit dem zweiten Schaltkontakt) elektrisch verbunden; und eine Rückkopplungseinrichtung mit einem dritten Spannungseingang zum Empfangen einer auf den zweiten Spannungseingang bezogenen Referenzgleichspannung, mit einem induktiven Verbindungselement, welches den dritten Spannungseingang und den Steuerkontakt elektrisch verbindet, und mit einer parasitären Kapazität, welche den ersten Schaltkontakt mit dem Steuerkontakt verbindet; wobei die Rückkopplungseinrichtung so ausgebildet ist, dass der Halbleiterschalter schwingt, so dass die erste Wechselspannung zwischen einem zweiten Kontakt des der ersten Wechselspannung zugeordneten ersten kapazitiven Resonanzelements und einem zweiten Kontakt des der ersten Wechselspannung zugeordneten zweiten kapazitiven Resonanzelements anliegt und so dass die zweite Wechselspannung zwischen einem zweiten Kontakt des der zweiten Wechselspannung zugeordneten ersten kapazitiven Resonanzelements und einem zweiten Kontakt des der zweiten Wechselspannung zugeordneten zweiten kapazitiven Resonanzelements anliegt. Aufgabe der vorliegenden Erfindung ist es, eine verbesserte galvanische Trennung bereitzustellen.

In einem ersten Aspekt betrifft die Erfindung eine Wechselspannungsversorgungseinrichtung zum Umwandeln einer energieliefernden Gleichspannung in eine erste Wechselspannung und in eine von der ersten Wechselspannung galvanisch getrennte zweite Wechselspannung, wobei die Wechselspannungsversorgungseinrichtung umfasst:
einen ersten Spannungseingang und einen zweiten Spannungseingang zum Empfangen der energieliefernden Gleichspannung;
ein Halbleiterschalter mit einem ersten Schaltkontakt, einem zweiten Schaltkontakt und einem Steuerkontakt, wobei der zweite Schaltkontakt mit dem zweiten Spannungseingang elektrisch verbunden ist;
ein induktives Eingangselement, welches den ersten Spannungseingang und den ersten Schaltkontakt elektrisch verbindet;
ein induktives Resonanzelement, welches den ersten Schaltkontakt mit einem ersten Kontakt eines der ersten Wechselspannung zugeordneten ersten kapazitiven Resonanzelements der Wechselspannungsversorgungseinrichtung und mit einem ersten Kontakt eines der zweiten Wechselspannung zugeordneten ersten kapazitiven Resonanzelements der Wechselspannungsversorgungseinrichtung elektrisch verbindet;
ein der ersten Wechselspannung zugeordnetes zweites kapazitives Resonanzelement der Wechselspannungsversorgungseinrichtung mit einem ersten Kontakt, der mit dem zweiten Schaltkontakt elektrisch verbunden ist;
ein der zweiten Wechselspannung zugeordnetes zweites kapazitives Resonanzelement der Wechselspannungsversorgungseinrichtung mit einem ersten Kontakt, der mit dem zweiten Schaltkontakt elektrisch verbunden ist; und
eine Rückkopplungseinrichtung mit einem dritten Spannungseingang zum Empfangen einer auf den zweiten Spannungseingang bezogenen Referenzgleichspannung, mit einem induktiven Verbindungselement, welches den dritten Spannungseingang und den Steuerkontakt elektrisch verbindet, und mit einer parasitären Kapazität, welche den ersten Schaltkontakt mit dem Steuerkontakt verbindet;
wobei die Rückkopplungseinrichtung so ausgebildet ist, dass der Halbleiterschalter schwingt, so dass die erste Wechselspannung zwischen einem zweiten Kontakt des der ersten Wechselspannung zugeordneten ersten kapazitiven Resonanzelements und einem zweiten Kontakt des der ersten Wechselspannung zugeordneten zweiten kapazitiven Resonanzelements anliegt und so dass die zweite Wechselspannung zwischen einem zweiten Kontakt des der zweiten Wechselspannung zugeordneten ersten kapazitiven Resonanzelements und einem zweiten Kontakt des der zweiten Wechselspannung zugeordneten zweiten kapazitiven Resonanzelements anliegt.

Die Energie liefernde Gleichspannung kann dem ersten Spannungseingang und dem zweiten Spannungseingang mittels einer externen Gleichspannungsquelle zugeführt werden.

Unter galvanischer Trennung (auch galvanische Entkopplung) versteht man das Vermeiden der elektrischen Leitung zwischen zwei Stromkreisen, zwischen denen Leistung oder Signale ausgetauscht werden sollen. Die elektrische Leitung wird dabei durch elektrisch nicht leitfähige Kopplungsglieder aufgetrennt. Bei galvanischer Trennung sind die elektrischen Potentiale voneinander getrennt und die Stromkreise sind dann untereinander potentialfrei.

Die galvanische Trennung ist dort notwendig, wo sich die Stromkreise in einem gemeinsamen Gehäuse oder in einer vergleichbaren Funktionseinheit befinden und zumindest einer auf den anderen einwirken soll, sie dabei aber in ihren Bezugspotentialen getrennt bleiben müssen.

Bei dem Halbleiterschalter kann es sich um einen Transistor, insbesondere um einen Feldeffekttransistor handeln. Bei einem Feldeffekttransistor wird der erste Schaltkontakt "Drain", der zweite Schaltkontakt "Source" und der Steuerkontakt "Gate" genannt.

Unter einer elektrisch leitenden Verbindung kann eine niederohmigen elektrische Verbindung verstanden werden.

Bei dem induktiven Eingangselement kann es sich insbesondere um eine Spule handeln. Auch bei dem induktiven Resonanzelement kann es sich um eine Spule handeln.

Bei dem der ersten Wechselspannung zugeordneten ersten kapazitiven Resonanzelement, bei dem der ersten Wechselspannung zugeordneten zweiten kapazitiven Resonanzelement, bei dem der zweiten Wechselspannung zugeordneten ersten kapazitiven Resonanzelement und bei dem der zweiten Wechselspannung zugeordneten zweiten kapazitiven Resonanzelement kann es sich jeweils um ein Kondensatorbauelement, insbesondere um einen Festkondensatorbauelement, handeln.

Ein Kondensatorbauelement ist ein passives elektrisches Bauelement. In einem Wechselstromkreis wirkt ein Kondensatorbauelement als Wechselstromwiderstand mit einem frequenzabhängigen Impedanzwert.

Kondensatorbauelemente bestehen aus zwei elektrisch leitfähigen Flächen, den Elektroden, die von einem isolierenden Material, dem Dielektrikum, voneinander getrennt sind. Die Größe der Kapazität wird durch die Fläche der Elektroden, das Material des Dielektrikums und den Abstand der Elektroden zueinander bestimmt. Festkondensatorbauelemente haben einen definierten und mit einer Toleranz versehenen Kapazitätswert, da deren Geometrie nicht veränderbar ist.

Eine parasitäre Kapazität, also eine sogenannte Streukapazität, ist eine unerwünschte aber nicht vermeidbare Kapazität, welche in einer elektrischen Einrichtung nicht durch ein separates Bauteil, sondern durch die elektrische Einrichtung selbst erzeugt wird.

Die Rückkopplungseinrichtung, welche den dritten Spannungseingang, das induktiven Verbindungselement und die parasitäre Kapazität zwischen dem ersten Schaltkontakt und dem Steuerkontakt umfasst und der Rückkopplungseinrichtung der Figur 1 der D2 entspricht, führt einen Teil des elektrischen Signals, welches an dem ersten Steuerkontakt anliegt, derart um 180° phasenverschoben zum Steuerkontakt zurück, so dass der Halbleiterschalter schwingt. Die Amplitude der Schwingung kann dabei mittels der Referenzgleichspannung am dritten Spannungseingang eingestellt werden. Die Referenzgleichspannung kann dabei dem zweiten Spannungseingang und dem dritten Spannungseingang mittels einer, bevorzugt steuer-oder regelbaren, externen Referenzgleichspannungsversorgung zugeführt werden.

Die Wechselspannungsversorgungseinrichtung, insbesondere deren Rückkopplungseinrichtung, kann bei Bedarf durch zusätzliche passive Bauelemente ergänzt werden.

Die galvanische Trennung der ersten Wechselspannung von der zweiten Wechselspannung wird dabei durch das der ersten Wechselspannung zugeordnete erste kapazitive Resonanzelement, das der ersten Wechselspannung zugeordnete zweite kapazitive Resonanzelement, das der zweiten Wechselspannung zugeordnete erste kapazitive Resonanzelement und das der zweiten Wechselspannung zugeordnete zweite kapazitive Resonanzelement sichergestellt, da diese Gleichströme sperren. Da das induktive Resonanzelement mit den ersten Kontakten der kapazitiven Resonanzelemente verbunden ist, genügt ein einziges induktives Resonanzelement. Insbesondere können so induktive Elemente, welche jeweils mit einem der zweiten Kontakte der kapazitiven Resonanzelemente elektrisch verbunden sind, vermieden werden.

Die Erfindung ist am Beispiel der Erzeugung einer ersten Wechselspannung und einer davon galvanisch getrennten zweiten Wechselspannung beschrieben. Es können jedoch auch weitere galvanisch getrennte Wechselspannungen erzeugt werden, beispielsweise so, dass insgesamt sechs voneinander galvanisch getrennte Wechselspannungen zur Verfügung stehen.

In diesem Fall wären für jede weitere galvanisch getrennte Wechselspannung ein der jeweiligen weiteren Wechselspannung zugeordnetes erstes kapazitives Resonanzelement und ein der jeweiligen weiteren Wechselspannung zugeordnetes zweites kapazitives Resonanzelement erforderlich. Ein erster Kontakt des ersten kapazitiven Resonanzelements wäre dann über das induktive Resonanzelement mit dem ersten Schaltkontakt und ein erster Kontakt des zweiten kapazitiven Resonanzelements mit dem zweiten Schaltkontakt elektrisch zu verbinden. Die jeweilige weitere Wechselspannung würde dann an einem zweiten Kontakt des ersten kapazitiven Resonanzelements und an einem zweiten Kontakt des zweiten kapazitiven Resonanzelements anliegen. Auch wenn mehr als zwei voneinander galvanisch getrennte Wechselspannungen erzeugt werden, ist lediglich ein einziges induktives Resonanzelement erforderlich.

Jede der Wechselspannungen kann jeweils eine Last mit elektrischer Energie versorgen, wobei die Wechselspannungen kein gemeinsames Bezugspotenzial aufweisen.

Die wesentlichen Vorteile der erfindungsgemäßen Wechselspannungsversorgungseinrichtung bestehen einerseits darin, dass keinerlei Transformatoren erforderlich sind, und andererseits darin, dass auf der Seite der zweiten Kontakte der kapazitiven Resonanzelemente, als auf der Ausgangsseite der kapazitiven Resonanzelemente keinerlei induktive Elemente erforderlich sind. Auf diese Weise können aufwändige, teure und bauraumintensive Bauelemente, insbesondere auf der Ausgangsseite der kapazitiven Resonanzelemente, vermeiden

Es ist nicht erforderlich, aber möglich, die Wechselspannungsversorgungseinrichtung in Resonanz mit den kapazitiven Resonanzelementen zu betreiben.

Gemäß einer bevorzugten Weiterbildung der Erfindung weisen das der ersten Wechselspannung zugeordnete erste kapazitive Resonanzelement und/oder das der ersten Wechselspannung zugeordnete zweite kapazitive Resonanzelement und/oder das der zweiten Wechselspannung zugeordnete erste kapazitive Resonanzelement und/oder das der zweiten Wechselspannung zugeordnete zweite kapazitive Resonanzelement eine kleinere Kapazität auf als eine parasitäre Kapazität zwischen dem ersten Schaltkontakt und dem zweiten Schaltkontakt. Auf diese Weise kann der Wirkungsgrad der Wechselspannungsversorgungseinrichtung verbessert werden.

Nach einer bevorzugten Weiterbildung der Erfindung weisen das der ersten Wechselspannung zugeordnete erste kapazitive Resonanzelement, das der ersten Wechselspannung zugeordnete zweite kapazitive Resonanzelement, das der zweiten Wechselspannung zugeordnete erste kapazitive Resonanzelement und das der zweiten Wechselspannung zugeordnete zweite kapazitive Resonanzelement eine selbe Kapazität auf. Auch diese Merkmale kommen dem Wirkungsgrad der Wechselspannungsversorgungseinrichtung entgegen.

Gemäß einer bevorzugten Weiterbildung der Erfindung sind das der ersten Wechselspannung zugeordnete erste kapazitive Resonanzelement und/oder das der ersten Wechselspannung zugeordnete zweite kapazitive Resonanzelement und/oder das der zweiten Wechselspannung zugeordnete erste kapazitive Resonanzelement und/oder das der zweiten Wechselspannung zugeordnete zweite kapazitive Resonanzelement als kapazitive Strukturen einer Leiterplatte ausgebildet. Auf diese Weise können die kapazitiven Resonanzelemente kostengünstig hergestellt werden. Auch Beaufschlagen die kapazitiven Resonanzelemente auf diese Weise nur wenig Bauraum.

In einem weiteren Aspekt betrifft die Erfindung eine Gleichspannungsversorgungseinrichtung zum Umwandeln einer energieliefernden Gleichspannung in eine erste Gleichspannung und in eine von der ersten Gleichspannung galvanisch getrennte zweite Gleichspannung, wobei die Gleichspannungsversorgungseinrichtung umfasst:
eine Wechselspannungsversorgungseinrichtung nach einem der vorstehenden Ansprüche;
eine erste Gleichrichtereinrichtung zum Gleichrichten der ersten Wechselspannung, wobei ein erster Eingangskontakt der ersten Gleichrichtereinrichtung mit dem zweiten Kontakt des der ersten Wechselspannung zugeordneten ersten kapazitiven Resonanzelements elektrisch verbunden ist, wobei ein zweiter Eingangskontakt der ersten Gleichrichtereinrichtung mit dem zweiten Kontakt des der ersten Wechselspannung zugeordneten zweiten kapazitiven Resonanzelements elektrisch verbunden ist, und wobei die erste Gleichspannung zwischen einem ersten Ausgangskontakt der ersten Gleichrichtereinrichtung und einem zweiten Ausgangskontakt der ersten Gleichrichtereinrichtung anliegt; und
eine zweite Gleichrichtereinrichtung zum Gleichrichten der zweiten Wechselspannung, wobei ein erster Eingangskontakt der zweiten Gleichrichtereinrichtung mit dem zweiten Kontakt des der zweiten Wechselspannung zugeordneten ersten kapazitiven Resonanzelements elektrisch verbunden ist, wobei ein zweiter Eingangskontakt der zweiten Gleichrichtereinrichtung mit dem zweiten Kontakt des der zweiten Wechselspannung zugeordneten zweiten kapazitiven Resonanzelements elektrisch verbunden ist, und wobei die zweite Gleichspannung zwischen einem ersten Ausgangskontakt der zweiten Gleichrichtereinrichtung und einem zweiten Ausgangskontakt der zweiten Gleichrichtereinrichtung anliegt.

Die Gleichrichtereinrichtungen können insbesondere auf der Basis von Halbleitergleichrichtern hergestellt werden.

Da die den Gleichrichtereinrichtungen zugeführten Wechselspannungen galvanisch voneinander getrennt sind, können auch die mittels der Gleichrichtereinrichtungen erzeugten Gleichspannungen galvanisch voneinander getrennt sein.

Hier ist beispielhaft die Erzeugung einer ersten Gleichspannung und einer davon galvanisch getrennten zweiten Gleichspannung beschriebenen. Mittels entsprechender Ausführungsbeispiele können jedoch auch weitere galvanisch getrennte Gleichspannungen erzeugt werden, beispielsweise so, dass insgesamt sechs voneinander galvanisch getrennte Gleichspannungen zur Verfügung stehen.

In diesem Fall wäre für jede weitere galvanisch getrennte Gleichspannung, wie oben beschrieben, die Erzeugung einer weiteren galvanisch getrennten Wechselspannung vorzusehen. Die jeweilige weitere galvanisch getrennte Wechselspannung wäre dann mit einer weiteren Gleichrichtereinrichtung, welche analog zu der ersten Gleichrichtereinrichtung und der zweiten Gleichrichtereinrichtung aufgebaut werden könnten, gleichzurichten.

Gemäß einer bevorzugten Weiterbildung der Erfindung weist die erste Gleichrichtereinrichtung eine erste Diode und eine zweite Diode auf;
wobei eine Anode der ersten Diode der ersten Gleichrichterschaltung mit dem ersten Eingangskontakt der ersten Gleichrichterschaltung und eine Kathode der ersten Diode der ersten Gleichrichterschaltung mit dem ersten Ausgangskontakt der ersten Gleichrichterschaltung elektrisch verbunden ist, wobei eine Kathode der zweiten Diode der ersten Gleichrichterschaltung mit dem ersten Eingangskontakt der ersten Gleichrichterschaltung und eine Anode der zweiten Diode der ersten Gleichrichterschaltung mit dem zweiten Ausgangskontakt der ersten Gleichrichterschaltung elektrisch verbunden ist;
wobei die zweite Gleichrichtereinrichtung eine erste Diode und eine zweite Diode aufweist;
wobei eine Anode der ersten Diode der zweiten Gleichrichterschaltung mit dem ersten Eingangskontakt der zweiten Gleichrichterschaltung und eine Kathode der ersten Diode der zweiten Gleichrichterschaltung mit dem ersten Ausgangskontakt der zweiten Gleichrichterschaltung elektrisch verbunden ist, wobei eine Kathode der zweiten Diode der zweiten Gleichrichterschaltung mit dem ersten Eingangskontakt der zweiten Gleichrichterschaltung und eine Anode der zweiten Diode der zweiten Gleichrichterschaltung mit dem zweiten Ausgangskontakt der zweiten Gleichrichterschaltung elektrisch verbunden ist.

Auf diese Weise ist die erste Gleichspannung symmetrisch zum zweiten Eingangskontakt der ersten Gleichrichtereinrichtung. Ebenso ist die zweite Gleichspannung symmetrisch zum zweiten Eingangskontakt der zweiten Gleichrichtereinrichtung.

Derartige Gleichrichtereinrichtungen werden auch als Halbbrücke bezeichnet. Es wäre aber auch möglich, die Gleichrichtereinrichtungen jeweils als Vollbrücke auszuführen, bei der eine Anode einer zusätzlichen dritten Diode mit dem zweiten Eingangskontakt und eine Kathode der dritten Diode mit dem ersten Ausgangskontakt elektrisch verbunden ist, und bei der eine Kathode der zusätzlichen vierten Diode mit dem ersten Eingangskontakt und eine Anode der vierten Diode mit dem zweiten Ausgangskontakt elektrisch verbunden ist.

Nach einer bevorzugten Weiterbildung der Erfindung weist die erste Gleichrichtereinrichtung einen ersten Kondensator und einen zweiten Kondensator auf;
wobei ein erster Kontakt des ersten Kondensators der ersten Gleichrichterschaltung mit dem ersten Ausgangskontakt der ersten Gleichrichterschaltung und ein zweiter Kontakt des ersten Kondensators der ersten Gleichrichterschaltung mit dem zweiten Eingangskontakt der ersten Gleichrichterschaltung elektrisch verbunden ist, wobei ein erster Kontakt des zweiten Kondensators der ersten Gleichrichterschaltung mit dem zweiten Eingangskontakt der ersten Gleichrichterschaltung und ein zweiter Kontakt des zweiten Kondensators der ersten Gleichrichterschaltung mit dem zweiten Ausgangskontakt der ersten Gleichrichterschaltung elektrisch verbunden ist;
wobei die zweite Gleichrichtereinrichtung einen ersten Kondensator und einen zweiten Kondensator aufweist;
wobei ein erster Kontakt des ersten Kondensators der zweiten Gleichrichterschaltung mit dem ersten Ausgangskontakt der zweiten Gleichrichterschaltung und ein zweiter Kontakt des ersten Kondensators der zweiten Gleichrichterschaltung mit dem zweiten Eingangskontakt der zweiten Gleichrichterschaltung elektrisch verbunden ist, wobei ein erster Kontakt des zweiten Kondensators der zweiten Gleichrichterschaltung mit dem zweiten Eingangskontakt der zweiten Gleichrichterschaltung und ein zweiter Kontakt des zweiten Kondensators der zweiten Gleichrichterschaltung mit dem zweiten Ausgangskontakt der zweiten Gleichrichterschaltung elektrisch verbunden ist.

Auf diese Weise können sowohl die erste Gleichspannung als auch zweite Gleichspannung geglättet werden.

In einem weiteren Aspekt betrifft die Erfindung eine Treiberschaltung zum Ansteuern eines ersten Leistungshalbleiters und eines zweiten Leistungshalbleiters, welche in Reihe geschaltet sind, wobei die Treiberschaltung umfasst:
obige Gleichspannungsversorgungseinrichtung; eine erste Treibereinrichtung zum Ansteuern des ersten Leistungshalbleiters; eine zweite Treibereinrichtung zum Ansteuern des zweiten Leistungshalbleiters;
   wobei ein erster Spannungseingangskontakt der ersten Treibereinrichtung mit dem ersten Ausgangskontakt der ersten Gleichrichterschaltung und ein zweiter Spannungseingangskontakt der ersten Treibereinrichtung mit dem zweiten Ausgangskontakt der ersten Gleichrichterschaltung elektrisch verbunden ist;
   wobei ein erster Spannungseingangskontakt der zweiten Treibereinrichtung mit dem ersten Ausgangskontakt der zweiten Gleichrichterschaltung und ein zweiter Spannungseingangskontakt der zweiten Treibereinrichtung mit dem zweiten Ausgangskontakt der zweiten Gleichrichterschaltung elektrisch verbunden ist.

Die erste Gleichspannung kann dabei als Versorgungsspannung für die erste Treibereinrichtung verwendet werden. Ebenso kann die zweite Gleichspannung als Versorgungsspannung für die zweite Treibereinrichtung verwendet werden, wobei gewährleistet ist, dass die Versorgungsspannungen der beiden Treibereinrichtungen galvanisch voneinander getrennt sind.

Beispielhaft weist hier die Treiberschaltung eine erste Treibereinrichtung und eine zweite Treibereinrichtung auf. Es können jedoch auch weitere Treibereinrichtungen vorgesehen sein, wobei dann die Gleichspannungsversorgungseinrichtung so auszuführen wäre, dass für jede der weiteren Treibereinrichtungen jeweils eine weitere galvanisch getrennte Gleichspannung zur Verfügung steht. Jede der weiteren Treibereinrichtungen kann dann einen weiteren in Reihe zu dem ersten Leistungshalbleiter und dem zweiten Leistungshalbleiter geschalteten weiteren Leistungshalbleiter ansteuern. Beispielsweise können insgesamt sechs voneinander galvanisch getrennte Treiberschaltungen vorgesehen werden.

In einem weiteren Aspekt betrifft Erfindung eine Leistungshalbleiterschaltung, wobei die Leistungshalbleiterschaltung umfasst:
einen ersten Leistungshalbleiter;
einen zweiten Leistungshalbleiter; obige Treiberschaltung; wobei ein erster Schaltkontakt des ersten Leistungshalbleiters mit einem ersten Versorgungsspannungskontakt elektrisch verbunden ist, wobei ein zweiter Schaltkontakt des ersten Leistungshalbleiters mit einem ersten Schaltkontakt des zweiten Leistungshalbleiters elektrisch verbunden ist, wobei ein zweiter Schaltkontakt des zweiten Leistungshalbleiters mit einem ersten Versorgungsspannungskontakt elektrisch verbunden ist;
wobei ein Schaltausgang der ersten Treibereinrichtung mit einem Steuerkontakt des ersten Leistungshalbleiters und der zweite Eingangskontakt der ersten Gleichrichterschaltung mit dem zweiten Schaltkontakt des ersten Leistungshalbleiters elektrisch verbunden sind;
wobei ein Schaltausgang der zweiten Treibereinrichtung mit einem Steuerkontakt des zweiten Leistungshalbleiters und der zweite Eingangskontakt der zweiten Gleichrichterschaltung mit dem zweiten Schaltkontakt des zweiten Leistungshalbleiters elektrisch verbunden sind.

Beispielhaft ist hier eine Leistungshalbleiterschaltung mit einem ersten Leistungshalbleiter und mit einem zweiten Leistungshalbleiter beschrieben. Es sind jedoch auch Ausführungsbeispiele denkbar, bei denen weitere Leistungshalbleiter vorgesehen sind. In diesem Fall wäre die Treiberschaltung, wie oben beschrieben, so auszuführen, dass für jeden der weiteren Leistungshalbleiter jeweils eine weitere Treibereinrichtung zur Verfügung steht. Beispielsweise können insgesamt sechs Leistungshalbleiter vorgesehen werden, etwa wenn drei Halbbrücken mit jeweils zwei Leistungshalbleitern parallel geschaltet werden.

Im Folgenden werden die vorliegende Erfindung und deren Vorteile anhand von Figuren näher beschrieben. Es zeigen:
Figur 1 eine Wechselspannungsversorgungseinrichtung im Sinne der Erfindung in einer schematischen Darstellung;
Figur 2 ein erstes Ausführungsbeispiel einer Gleichspannungsversorgungseinrichtung in einer schematischen Darstellung;
Figur 3 ein zweites Ausführungsbeispiel einer Gleichspannungsversorgungseinrichtung in einer schematischen Darstellung;
Figur 4 ein Ausführungsbeispiel einer Treiberschaltung in einer schematischen Darstellung; und
Figur 5 ein Ausführungsbeispiel einer Leistungshalbleiterschaltung in einer schematischen Darstellung.

Gleiche Elemente ind im Folgenden mit gleichen Bezugszeichen versehen.

In der folgenden Beschreibung werden Ausführungsbeispiele mit einer Vielzahl von Merkmalen der vorliegenden Erfindung näher beschrieben, um ein besseres Verständnis der Erfindung zu vermitteln. Die Erfindung ist durch den unabhängigen Anspruch 1 definiert.

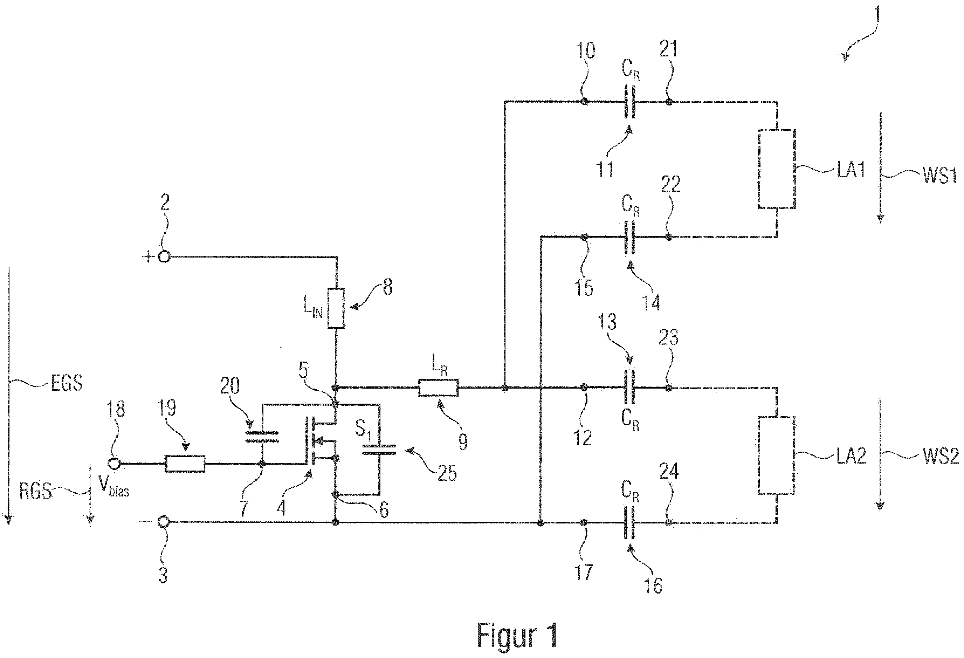

Figur 1 zeigt eine Wechselspannungsversorgungseinrichtung 1 im Sinne der Erfindung in einer schematischen Darstellung. Die Wechselspannungsversorgungseinrichtung 1 zum Umwandeln einer energieliefernden Gleichspannung EGS in eine erste Wechselspannung WS1 und in eine von der ersten Wechselspannung WS1 galvanisch getrennte zweite Wechselspannung WS2 umfasst:
einen ersten Spannungseingang 2 und einen zweiten Spannungseingang 3 zum Empfangen der energieliefernden Gleichspannung EGS;
ein Halbleiterschalter 4 mit einem ersten Schaltkontakt 5, einem zweiten Schaltkontakt 6 und einem Steuerkontakt 7, wobei der zweite Schaltkontakt 6 mit dem zweiten Spannungseingang 3 elektrisch verbunden ist;
ein induktives Eingangselement 8, welches den ersten Spannungseingang 2 und den ersten Schaltkontakt 5 elektrisch verbindet;
ein induktives Resonanzelement 9, welches den ersten Schaltkontakt 5 mit einem ersten Kontakt 10 eines der ersten Wechselspannung WS1 zugeordneten ersten kapazitiven Resonanzelements 11 und mit einem ersten Kontakt 12 eines der zweiten Wechselspannung WS2 zugeordneten ersten kapazitiven Resonanzelements 13 elektrisch verbindet;
ein der ersten Wechselspannung WS1 zugeordnetes zweites kapazitives Resonanzelement 14 mit einem ersten Kontakt 15, der mit dem zweiten Schaltkontakt 6 elektrisch verbunden ist;
ein der zweiten Wechselspannung WS2 zugeordnetes zweites kapazitives Resonanzelement 16 mit einem ersten Kontakt 17, der mit dem zweiten Schaltkontakt 6 elektrisch verbunden ist; und
eine Rückkopplungseinrichtung 18, 19, 20 mit einem dritten Spannungseingang 18 zum Empfangen einer auf den zweiten Spannungseingang 3 bezogenen Referenzgleichspannung RGS, mit einem induktiven Verbindungselement 19, welches den dritten Spannungseingang 18 und den Steuerkontakt 7 elektrisch verbindet, und mit einer parasitären Kapazität 20, welche den ersten Schaltkontakt 5 mit dem Steuerkontakt 7 verbindet;
wobei die Rückkopplungseinrichtung 18, 19, 20 so ausgebildet ist, dass der Halbleiterschalter 4 schwingt, so dass die erste Wechselspannung WS1 zwischen einem zweiten Kontakt 21 des der ersten Wechselspannung WS1 zugeordneten ersten kapazitiven Resonanzelements 11 und einem zweiten Kontakt 22 des der ersten Wechselspannung WS1 zugeordneten zweiten kapazitiven Resonanzelements 14 anliegt und so dass die zweite Wechselspannung WS2 zwischen einem zweiten Kontakt 23 des der zweiten Wechselspannung WS2 zugeordneten ersten kapazitiven Resonanzelements 13 und einem zweiten Kontakt 24 des der zweiten Wechselspannung WS2 zugeordneten zweiten kapazitiven Resonanzelements 16 anliegt.

Die erste Wechselspannung WS1 kann zur elektrischen Energieversorgung eines ersten Wechselspannungsverbrauchers LA1 verwendet werden. Ebenso kann die zweite Wechselspannung WS2 zur elektrischen Energieversorgung eines zweiten Wechselspannungsverbrauchers LA2 verwendet werden.

Gemäß einer bevorzugten Weiterbildung der Erfindung weisen das der ersten Wechselspannung WS1 zugeordnete erste kapazitive Resonanzelement 11 und/oder das der ersten Wechselspannung WS1 zugeordnete zweite kapazitive Resonanzelement 14 und/oder das der zweiten Wechselspannung WS2 zugeordnete erste kapazitive Resonanzelement 13 und/oder das der zweiten Wechselspannung WS2 zugeordnete zweite kapazitive Resonanzelement 16 eine kleinere Kapazität auf als eine parasitäre Kapazität 25 zwischen dem ersten Schaltkontakt 5 und dem zweiten Schaltkontakt 6.

Nach einer bevorzugten Weiterbildung der Erfindung weisen das der ersten Wechselspannung WS1 zugeordnete erste kapazitive Resonanzelement 11, das der ersten Wechselspannung WS1 zugeordnete zweite kapazitive Resonanzelement 14, das der zweiten Wechselspannung WS2 zugeordnete erste kapazitive Resonanzelement 13 und das der zweiten Wechselspannung WS2 zugeordnete zweite kapazitive Resonanzelement 16 eine selbe Kapazität auf.

Gemäß einer bevorzugten Weiterbildung der Erfindung sind das der ersten Wechselspannung WS1 zugeordnete erste kapazitive Resonanzelement 11 und/oder das der ersten Wechselspannung WS1 zugeordnete zweite kapazitive Resonanzelement 14 und/oder das der zweiten Wechselspannung WS2 zugeordnete erste kapazitive Resonanzelement 13 und/oder das der zweiten Wechselspannung WS2 zugeordnete zweite kapazitive Resonanzelement 16 als kapazitive Strukturen einer Leiterplatte ausgebildet.

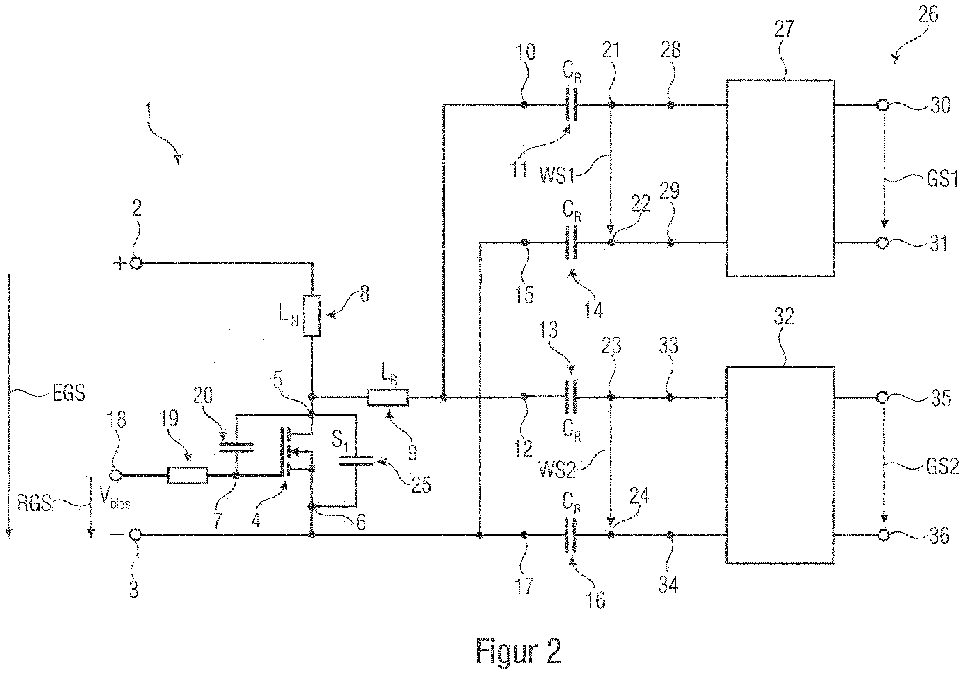

Figur 2 zeigt ein erstes Ausführungsbeispiel einer Gleichspannungsversorgungseinrichtung 26 in einer schematischen Darstellung. Die Gleichspannungsversorgungseinrichtung 26 zum Umwandeln einer energieliefernden Gleichspannung EGS in eine erste Gleichspannung GS1 und in eine von der ersten Gleichspannung GS1 galvanisch getrennte zweite Gleichspannung GS2 umfasst:
obige Wechselspannungsversorgungseinrichtung;

eine erste Gleichrichtereinrichtung 27 zum Gleichrichten der ersten Wechselspannung WS1, wobei ein erster Eingangskontakt 28 der ersten Gleichrichtereinrichtung 27 mit dem zweiten Kontakt 21 des der ersten Wechselspannung WS1 zugeordneten ersten kapazitiven Resonanzelements 11 elektrisch verbunden ist, wobei ein zweiter Eingangskontakt 29 der ersten Gleichrichtereinrichtung 27 mit dem zweiten Kontakt 22 des der ersten Wechselspannung WS1 zugeordneten zweiten kapazitiven Resonanzelements 14 elektrisch verbunden ist, und wobei die erste Gleichspannung GS1 zwischen einem ersten Ausgangskontakt 30 der ersten Gleichrichtereinrichtung 27 und einem zweiten Ausgangskontakt 31 der ersten Gleichrichtereinrichtung 27 anliegt; und
eine zweite Gleichrichtereinrichtung 32 zum Gleichrichten der zweiten Wechselspannung WS2, wobei ein erster Eingangskontakt 33 der zweiten Gleichrichtereinrichtung 32 mit dem zweiten Kontakt 23 des der zweiten Wechselspannung WS2 zugeordneten ersten kapazitiven Resonanzelements 13 elektrisch verbunden ist, wobei ein zweiter Eingangskontakt 34 der zweiten Gleichrichtereinrichtung 32 mit dem zweiten Kontakt 24 des der zweiten Wechselspannung WS2 zugeordneten zweiten kapazitiven Resonanzelements 16 elektrisch verbunden ist, und wobei die zweite Gleichspannung GS2 zwischen einem ersten Ausgangskontakt 35 der zweiten Gleichrichtereinrichtung 32 und einem zweiten Ausgangskontakt 36 der zweiten Gleichrichtereinrichtung 32 anliegt.

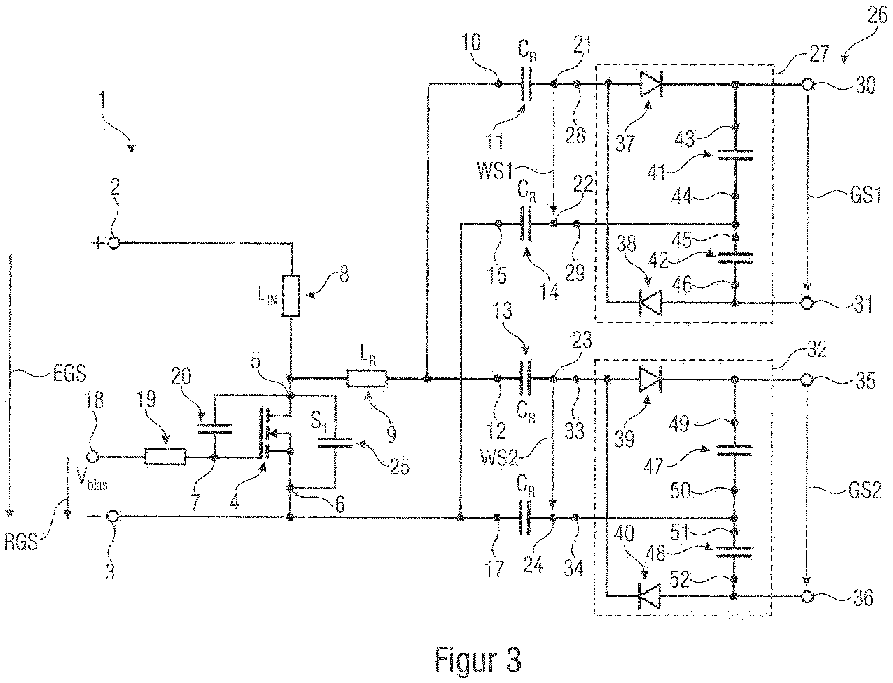

Figur 3 zeigt ein zweites Ausführungsbeispiel einer Gleichspannungsversorgungseinrichtung 26 in einer schematischen Darstellung.

Gemäß einer bevorzugten Weiterbildung der Erfindung weist die erste Gleichrichtereinrichtung 27 eine erste Diode 37 und eine zweite Diode 38 auf;
wobei eine Anode der ersten Diode 37 der ersten Gleichrichterschaltung 27 mit dem ersten Eingangskontakt 28 der ersten Gleichrichterschaltung 27 und eine Kathode der ersten Diode 37 der ersten Gleichrichterschaltung 27 mit dem ersten Ausgangskontakt 30 der ersten Gleichrichterschaltung 27 elektrisch verbunden ist, wobei eine Kathode der zweiten Diode 38 der ersten Gleichrichterschaltung 27 mit dem ersten Eingangskontakt 30 der ersten Gleichrichterschaltung 27 und eine Anode der zweiten Diode 38 der ersten Gleichrichterschaltung 27 mit dem zweiten Ausgangskontakt 31 der ersten Gleichrichterschaltung 27 elektrisch verbunden ist;
wobei die zweite Gleichrichtereinrichtung 32 eine erste Diode 39 und eine zweite Diode 40 aufweist;
wobei eine Anode der ersten Diode 39 der zweiten Gleichrichterschaltung 32 mit dem ersten Eingangskontakt 33 der zweiten Gleichrichterschaltung 37 und eine Kathode der ersten Diode 39 der zweiten Gleichrichterschaltung 32 mit dem ersten Ausgangskontakt 35 der zweiten Gleichrichterschaltung 32 elektrisch verbunden ist, wobei eine Kathode der zweiten Diode 40 der zweiten Gleichrichterschaltung 32 mit dem ersten Eingangskontakt 33 der zweiten Gleichrichterschaltung 32 und eine Anode der zweiten Diode 40 der zweiten Gleichrichterschaltung 32 mit dem zweiten Ausgangskontakt 36 der zweiten Gleichrichterschaltung 32 elektrisch verbunden ist.

Nach einer vorteilhaften Weiterbildung der Erfindung weist die erste Gleichrichtereinrichtung 27 einen ersten Kondensator 41 und einen zweiten Kondensator 42 auf;
wobei ein erster Kontakt 43 des ersten Kondensators 41 der ersten Gleichrichterschaltung 27 mit dem ersten Ausgangskontakt 30 der ersten Gleichrichterschaltung 27 und ein zweiter Kontakt 44 des ersten Kondensators 41 der ersten Gleichrichterschaltung 27 mit dem zweiten Eingangskontakt 29 der ersten Gleichrichterschaltung 27 elektrisch verbunden ist, wobei ein erster Kontakt 45 des zweiten Kondensators 42 der ersten Gleichrichterschaltung 27 mit dem zweiten Eingangskontakt 29 der ersten Gleichrichterschaltung 27 und ein zweiter Kontakt 46 des zweiten Kondensators 42 der ersten Gleichrichterschaltung 27 mit dem zweiten Ausgangskontakt 31 der ersten Gleichrichterschaltung 27 elektrisch verbunden ist;
wobei die zweite Gleichrichtereinrichtung 32 einen ersten Kondensator 47 und einen zweiten Kondensator 48 aufweist;
wobei ein erster Kontakt 49 des ersten Kondensators 47 der zweiten Gleichrichterschaltung 32 mit dem ersten Ausgangskontakt 35 der zweiten Gleichrichterschaltung 32 und ein zweiter Kontakt 50 des ersten Kondensators 47 der zweiten Gleichrichterschaltung 32 mit dem zweiten Eingangskontakt 34 der zweiten Gleichrichterschaltung 32 elektrisch verbunden ist, wobei ein erster Kontakt 51 des zweiten Kondensators 48 der zweiten Gleichrichterschaltung 32 mit dem zweiten Eingangskontakt 34 der zweiten Gleichrichterschaltung 32 und ein zweiter Kontakt 52 des zweiten Kondensators 48 der zweiten Gleichrichterschaltung 32 mit dem zweiten Ausgangskontakt 36 der zweiten Gleichrichterschaltung 32 elektrisch verbunden ist.

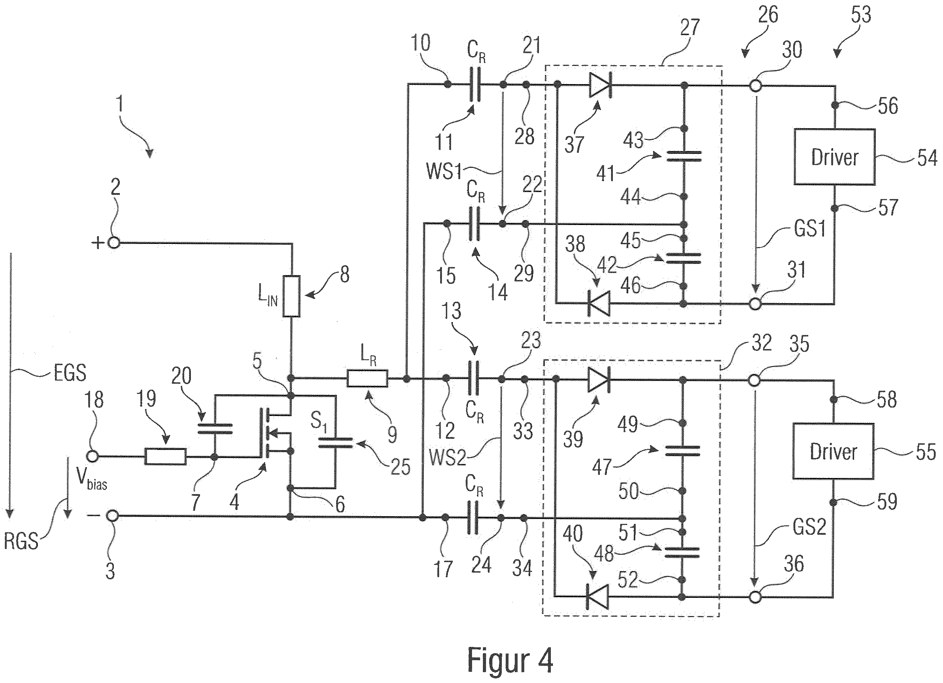

Figur 4 zeigt ein Ausführungsbeispiel einer Treiberschaltung 53 in einer schematischen Darstellung. Die Treiberschaltung 53 zum Ansteuern eines ersten Leistungshalbleiters und eines zweiten Leistungshalbleiters, welche in Reihe geschaltet sind, umfasst:
obige Gleichspannungsversorgungseinrichtung 26 ;

eine erste Treibereinrichtung 54 zum Ansteuern des ersten Leistungshalbleiters;
eine zweite Treibereinrichtung 55 zum Ansteuern des zweiten Leistungshalbleiters; wobei ein erster Spannungseingangskontakt 56 der ersten Treibereinrichtung 54 mit dem ersten Ausgangskontakt 30 der ersten Gleichrichterschaltung 27 und ein zweiter Spannungseingangskontakt 57 der ersten Treibereinrichtung 54 mit dem zweiten Ausgangskontakt 31 der ersten Gleichrichterschaltung 27 elektrisch verbunden ist; wobei ein erster Spannungseingangskontakt 58 der zweiten Treibereinrichtung 55 mit dem ersten Ausgangskontakt 35 der zweiten Gleichrichterschaltung 32 und ein zweiter Spannungseingangskontakt 59 der zweiten Treibereinrichtung 54 mit dem zweiten Ausgangskontakt 36 der zweiten Gleichrichterschaltung 36 elektrisch verbunden ist.

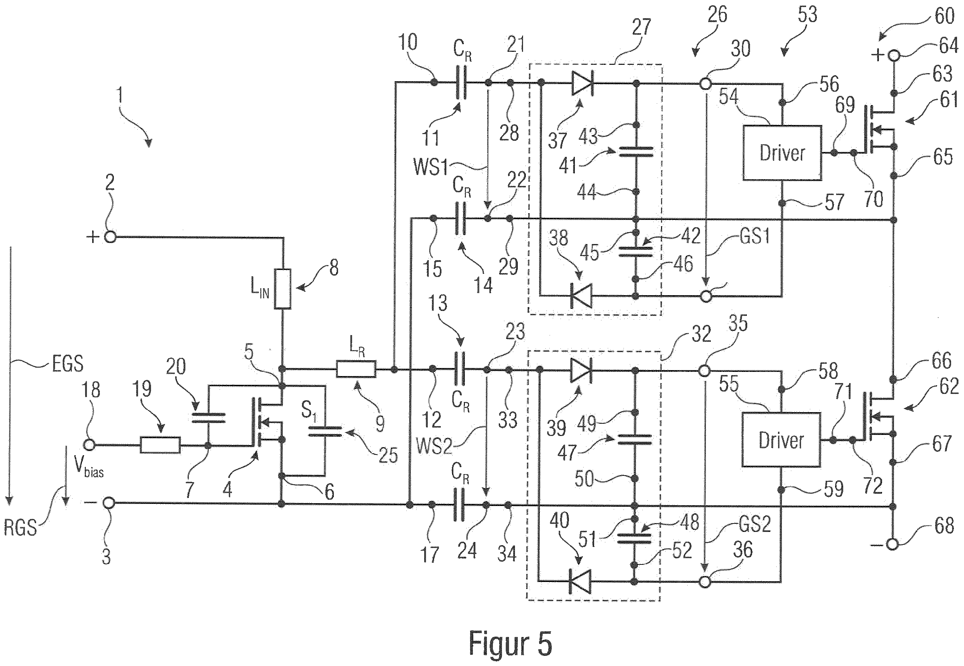

Figur 5 zeigt ein Ausführungsbeispiel einer Leistungshalbleiterschaltung in einer schematischen Darstellung. Die Leistungshalbleiterschaltung 60 umfasst:
einen ersten Leistungshalbleiter 61;
einen zweiten Leistungshalbleiter 62;
   obige Treiberschaltung 53 ;
wobei ein erster Schaltkontakt 63 des ersten Leistungshalbleiters 61 mit einem ersten Versorgungsspannungskontakt 64 elektrisch verbunden ist, wobei ein zweiter Schaltkontakt 65 des ersten Leistungshalbleiters 61 mit einem ersten Schaltkontakt 66 des zweiten Leistungshalbleiters 62 elektrisch verbunden ist, wobei ein zweiter Schaltkontakt 67 des zweiten Leistungshalbleiters 62 mit einem zweiten Versorgungsspannungskontakt 68 elektrisch verbunden ist;
wobei ein Schaltausgang 69 der ersten Treibereinrichtung 54 mit einem Steuerkontakt 70 des ersten Leistungshalbleiters 61 und der zweite Eingangskontakt 29 der ersten Gleichrichterschaltung 27 mit dem zweiten Schaltkontakt 65 des ersten Leistungshalbleiters 61 elektrisch verbunden sind;
wobei ein Schaltausgang der zweiten Treibereinrichtung 71 mit einem Steuerkontakt 72 des zweiten Leistungshalbleiters 62 und der zweite Eingangskontakt 34 der zweiten Gleichrichterschaltung 32 mit dem zweiten Schaltkontakt 67 des zweiten Leistungshalbleiters 62 elektrisch verbunden sind.

Die Spannung der energieliefernden Gleichspannung EGS kann je nach Anwendungsfall über einen weiten Bereich variieren. Beispielsweise kann die energieliefernde Gleichspannung EGS 24 V betragen. Die Spannung zwischen dem ersten Schaltkontakt 5 und dem zweiten Schaltkontakt 6 des Halbleiterschalters 4 kann dann >60 V sein. Die Kapazitäten der kapazitiven Resonanzelemente 11 und 14 sowie 12 und 16 können sehr klein sein, beispielsweise 2 pF, so dass keine Ausgangsströme entstehen können. Die erste Gleichspannung GS1 und die zweite Gleichspannung GS2 können jeweils zwischen 20 V und 24 V betragen. Die Dioden 37 und 38 der ersten Gleichrichterschaltung 27 sowie die Dioden 39 und 40 der zweiten Gleichrichterschaltung 32 sind bevorzugt gleichartig ausgebildet. Ebenso sind die Kondensatoren 41 und 42 der ersten Gleichrichterschaltung 27 sowie die Kondensatoren 47 und 48 der zweiten Gleichrichterschaltung 32 bevorzugt gleichartig ausgebildet. Bevorzugt schwingt der Halbleiterschalter 4 mit einer Frequenz von mehr als 10 MHz, da so die erforderlichen Kapazitäten und Induktivitäten klein gehalten werden können, was einer kostengünstigen und kompakten Bauart entgegenkommt.

### Bezugszeichen:

- 1: Wechselspannungsversorgungseinrichtung
- 2: erster Spannungseingang
- 3: zweiten Spannungseingang
- 4: Halbleiterschalter
- 5: erster Schaltkontakt
- 6: zweiter Schaltkontakt
- 7: Steuerkontakt
- 8: induktives Eingangselement
- 9: induktives Resonanzelement
- 10: erster Kontakt des der ersten Wechselspannung zugeordneten ersten kapazitiven Resonanzelements
- 11: der ersten Wechselspannung zugeordnetes erstes kapazitiven Resonanzelement
- 12: erster Kontakt des der zweiten Wechselspannung zugeordneten ersten kapazitiven Resonanzelements
- 13: der zweiten Wechselspannung zugeordnetes erstes kapazitiven Resonanzelement
- 14: der ersten Wechselspannung zugeordnetes zweites kapazitives Resonanzelement
- 15: erster Kontakt des der ersten Wechselspannung zugeordneten zweiten kapazitiven Resonanzelements
- 16: der zweiten Wechselspannung zugeordnetes zweites kapazitives Resonanzelement
- 17: erster Kontakt des der zweiten Wechselspannung zugeordneten zweiten kapazitiven Resonanzelements
- 18: dritter Spannungseingang
- 19: induktives Verbindungselement
- 20: parasitäre Kapazität
- 21: zweiter Kontakt des der ersten Wechselspannung zugeordneten ersten kapazitiven Resonanzelements
- 22: zweiter Kontakt des der ersten Wechselspannung zugeordneten zweiten kapazitiven Resonanzelements
- 23: zweiter Kontakt des der zweiten Wechselspannung zugeordneten ersten kapazitiven Resonanzelements
- 24: zweiter Kontakt des der zweiten Wechselspannung zugeordneten zweiten kapazitiven Resonanzelements
- 25: parasitäre Kapazität zwischen dem ersten Schaltkontakt und dem zweiten Schaltkontakt
- 26: Gleichspannungsversorgungseinrichtung
- 27: erste Gleichrichtereinrichtung
- 28: erster Eingangskontakt der ersten Gleichrichtereinrichtung
- 29: zweiter Eingangskontakt der ersten Gleichrichtereinrichtung
- 30: erster Ausgangskontakt der ersten Gleichrichtereinrichtung
- 31: zweiter Ausgangskontakt der ersten Gleichrichtereinrichtung
- 32: zweite Gleichrichtereinrichtung
- 33: erster Eingangskontakt der zweiten Gleichrichtereinrichtung
- 34: zweiter Eingangskontakt der zweiten Gleichrichtereinrichtung
- 35: erster Ausgangskontakt der zweiten Gleichrichtereinrichtung
- 36: zweiter Ausgangskontakt der zweiten Gleichrichtereinrichtung
- 37: erste Diode der ersten Gleichrichtereinrichtung
- 38: zweite Diode der ersten Gleichrichtereinrichtung
- 39: erste Diode der zweiten Gleichrichtereinrichtung
- 40: zweite Diode der zweiten Gleichrichtereinrichtung
- 41: erster Kondensator der ersten Gleichrichterschaltung
- 42: zweiter Kondensator der ersten Gleichrichterschaltung
- 43: erster Kontakt des ersten Kondensators der ersten Gleichrichterschaltung
- 44: zweiter Kontakt des ersten Kondensators der ersten Gleichrichterschaltung
- 45: erster Kontakt des zweiten Kondensators der ersten Gleichrichterschaltung
- 46: zweiter Kontakt des zweiten Kondensators der ersten Gleichrichterschaltung
- 47: erster Kondensator der zweiten Gleichrichterschaltung
- 48: zweiter Kondensator der zweiten Gleichrichterschaltung
- 49: erster Kontakt des ersten Kondensators der zweiten Gleichrichterschaltung
- 50: zweiter Kontakt des ersten Kondensators der zweiten Gleichrichterschaltung
- 51: erster Kontakt des zweiten Kondensators der zweiten Gleichrichterschaltung
- 52: zweiter Kontakt des zweiten Kondensators der zweiten Gleichrichterschaltung
- 53: Treiberschaltung
- 54: erste Treibereinrichtung
- 55: zweite Treibereinrichtung
- 56: erster Spannungseingangskontakt der ersten Treibereinrichtung
- 57: zweiter Spannungseingangskontakt der ersten Treibereinrichtung
- 58: erster Spannungseingangskontakt der zweiten Treibereinrichtung
- 59: zweiter Spannungseingangskontakt der zweiten Treibereinrichtung
- 60: Leistungshalbleiterschaltung
- 61: erster Leistungshalbleiter
- 62: zweiter Leistungshalbleiter
- 63: erster Schaltkontakt des ersten Leistungshalbleiters
- 64: erster Versorgungsspannungskontakt
- 65: zweiter Schaltkontakt des ersten Leistungshalbleiters
- 66: ersten Schaltkontakt des zweiten Leistungshalbleiters
- 67: zweiter Schaltkontakt des zweiten Leistungshalbleiters
- 68: zweiter Versorgungsspannungskontakt
- 69: Schaltausgang der ersten Treibereinrichtung
- 70: Steuerkontakt des ersten Leistungshalbleiters
- 71: Schaltausgang der zweiten Treibereinrichtung
- 72: Steuerkontakt des zweiten Leistungshalbleiters

- EGS: energieliefernden Gleichspannung
- WS1: erste Wechselspannung
- WS2: zweiter Wechselspannung
- RGS: Referenzgleichspannung
- LA1: erster Wechselspannungsverbraucher
- LA2: zweiter Wechselspannungsverbraucher
- GS1: erste Gleichspannung
- GS2: zweite Gleichspannung

## Patentansprüche

1. Wechselspannungsversorgungseinrichtung zum Umwandeln einer energieliefernden Gleichspannung (EGS) in eine erste Wechselspannung (WS1) und in eine von der ersten Wechselspannung (WS1) galvanisch getrennte zweite Wechselspannung (WS2), wobei die Wechselspannungsversorgungseinrichtung (1) umfasst:
einen ersten Spannungseingang (2) und einen zweiten Spannungseingang (3) zum Empfangen der energieliefernden Gleichspannung (EGS);
ein Halbleiterschalter (4) mit einem ersten Schaltkontakt (5), einem zweiten Schaltkontakt (6) und einem Steuerkontakt (7), wobei der zweite Schaltkontakt (6) mit dem zweiten Spannungseingang (3) elektrisch verbunden ist;
ein induktives Eingangselement (8), welches den ersten Spannungseingang (2) und den ersten Schaltkontakt (5) elektrisch verbindet;
ein induktives Resonanzelement (9), welches den ersten Schaltkontakt (5) mit einem ersten Kontakt (10) eines der ersten Wechselspannung (WS1) zugeordneten ersten kapazitiven Resonanzelements (11) der Wechselspannungsversorgungseinrichtung (1) und mit einem ersten Kontakt (12) eines der zweiten Wechselspannung (WS2) zugeordneten ersten kapazitiven Resonanzelements (13) der Wechselspannungsversorgungseinrichtung (1) elektrisch verbindet;
ein der ersten Wechselspannung (WS1) zugeordnetes zweites kapazitives Resonanzelement (14) der Wechselspannungsversorgungseinrichtung (1) mit einem ersten Kontakt (15), der mit dem zweiten Schaltkontakt (6) elektrisch verbunden ist;
ein der zweiten Wechselspannung (WS2) zugeordnetes zweites kapazitives Resonanzelement (16) der Wechselspannungsversorgungseinrichtung (1) mit einem ersten Kontakt (17), der mit dem zweiten Schaltkontakt (6) elektrisch verbunden ist; und
eine Rückkopplungseinrichtung (18, 19, 20) mit einem dritten Spannungseingang (18) zum Empfangen einer auf den zweiten Spannungseingang (3) bezogenen Referenzgleichspannung (RGS), mit einem induktiven Verbindungselement (19), welches den dritten Spannungseingang (18) und den Steuerkontakt (7) elektrisch verbindet, und mit einer parasitären Kapazität (20), welche den ersten Schaltkontakt (5) mit dem Steuerkontakt (7) verbindet;
wobei die Rückkopplungseinrichtung (18, 19, 20) so ausgebildet ist, dass der Halbleiterschalter (4) schwingt, so dass die erste Wechselspannung (WS1) zwischen einem zweiten Kontakt (21) des der ersten Wechselspannung (WS1) zugeordneten ersten kapazitiven Resonanzelements (11) und einem zweiten Kontakt (22) des der ersten Wechselspannung (WS1) zugeordneten zweiten kapazitiven Resonanzelements (14) anliegt und so dass die zweite Wechselspannung (WS2) zwischen einem zweiten Kontakt (23) des der zweiten Wechselspannung (WS2) zugeordneten ersten kapazitiven Resonanzelements (13) und einem zweiten Kontakt (24) des der zweiten Wechselspannung (WS2) zugeordneten zweiten kapazitiven Resonanzelements (16) anliegt.

2. Wechselspannungsversorgungseinrichtung nach vorstehendem Anspruch, wobei das der ersten Wechselspannung (WS1) zugeordnete erste kapazitive Resonanzelement (11) und/oder das der ersten Wechselspannung (WS1) zugeordnete zweite kapazitive Resonanzelement (14) und/oder das der zweiten Wechselspannung (WS2) zugeordnete erste kapazitive Resonanzelement (13) und/oder das der zweiten Wechselspannung (WS2) zugeordnete zweite kapazitive Resonanzelement (16) eine kleinere Kapazität aufweisen als eine parasitäre Kapazität (25) zwischen dem ersten Schaltkontakt (5) und dem zweiten Schaltkontakt (6).

3. Wechselspannungsversorgungseinrichtung nach einem der vorstehenden Ansprüche, wobei das der ersten Wechselspannung (WS1) zugeordnete erste kapazitive Resonanzelement (11), das der ersten Wechselspannung (WS1) zugeordnete zweite kapazitive Resonanzelement (14), das der zweiten Wechselspannung (WS2) zugeordnete erste kapazitive Resonanzelement (13) und das der zweiten Wechselspannung (WS2) zugeordnete zweite kapazitive Resonanzelement (16) eine selbe Kapazität aufweisen.

4. Wechselspannungsversorgungseinrichtung nach einem der vorstehenden Ansprüche, wobei das der ersten Wechselspannung (WS1) zugeordnete erste kapazitive Resonanzelement (11) und/oder das der ersten Wechselspannung (WS1) zugeordnete zweite kapazitive Resonanzelement (14) und/oder das der zweiten Wechselspannung (WS2) zugeordnete erste kapazitive Resonanzelement (13) und/oder das der zweiten Wechselspannung (WS2) zugeordnete zweite kapazitive Resonanzelement (16) als kapazitive Strukturen einer Leiterplatte ausgebildet sind.

5. Gleichspannungsversorgungseinrichtung zum Umwandeln einer energieliefernden Gleichspannung (EGS) in eine erste Gleichspannung (GS1) und in eine von der ersten Gleichspannung (GS1) galvanisch getrennte zweite Gleichspannung (GS2), wobei die Gleichspannungsversorgungseinrichtung (26) umfasst:
eine Wechselspannungsversorgungseinrichtung (1) nach einem der vorstehenden Ansprüche;
eine erste Gleichrichtereinrichtung (27) zum Gleichrichten der ersten Wechselspannung (WS1), wobei ein erster Eingangskontakt (28) der ersten Gleichrichtereinrichtung (27) mit dem zweiten Kontakt (21) des der ersten Wechselspannung (WS1) zugeordneten ersten kapazitiven Resonanzelements (11) elektrisch verbunden ist, wobei ein zweiter Eingangskontakt (29) der ersten Gleichrichtereinrichtung (27) mit dem zweiten Kontakt (22) des der ersten Wechselspannung (WS1) zugeordneten zweiten kapazitiven Resonanzelements (14) elektrisch verbunden ist, und wobei die erste Gleichspannung (GS1) zwischen einem ersten Ausgangskontakt (30) der ersten Gleichrichtereinrichtung (27) und einem zweiten Ausgangskontakt (31) der ersten Gleichrichtereinrichtung (27) anliegt; und
eine zweite Gleichrichtereinrichtung (32) zum Gleichrichten der zweiten Wechselspannung (WS2), wobei ein erster Eingangskontakt (33) der zweiten Gleichrichtereinrichtung (32) mit dem zweiten Kontakt (23) des der zweiten Wechselspannung (WS2) zugeordneten ersten kapazitiven Resonanzelements (13) elektrisch verbunden ist, wobei ein zweiter Eingangskontakt (34) der zweiten Gleichrichtereinrichtung (32) mit dem zweiten Kontakt (24) des der zweiten Wechselspannung (WS2) zugeordneten zweiten kapazitiven Resonanzelements (16) elektrisch verbunden ist, und wobei die zweite Gleichspannung (GS2) zwischen einem ersten Ausgangskontakt (35) der zweiten Gleichrichtereinrichtung (32) und einem zweiten Ausgangskontakt (36) der zweiten Gleichrichtereinrichtung (32) anliegt.

6. Gleichspannungsversorgungseinrichtung nach vorstehendem Anspruch, wobei die erste Gleichrichtereinrichtung (27) eine erste Diode (37) und eine zweite Diode (38) aufweist;
wobei eine Anode der ersten Diode (37) der ersten Gleichrichterschaltung (27) mit dem ersten Eingangskontakt (28) der ersten Gleichrichterschaltung (27) und eine Kathode der ersten Diode (37) der ersten Gleichrichterschaltung (27) mit dem ersten Ausgangskontakt (30) der ersten Gleichrichterschaltung (27) elektrisch verbunden ist, wobei eine Kathode der zweiten Diode (38) der ersten Gleichrichterschaltung (27) mit dem ersten Eingangskontakt (30) der ersten Gleichrichterschaltung (27) und eine Anode der zweiten Diode (38) der ersten Gleichrichterschaltung (27) mit dem zweiten Ausgangskontakt (31) der ersten Gleichrichterschaltung (27) elektrisch verbunden ist;
wobei die zweite Gleichrichtereinrichtung (32) eine erste Diode (39) und eine zweite Diode (40) aufweist;
wobei eine Anode der ersten Diode (39) der zweiten Gleichrichterschaltung (32) mit dem ersten Eingangskontakt (33) der zweiten Gleichrichterschaltung (37) und eine Kathode der ersten Diode (39) der zweiten Gleichrichterschaltung (32) mit dem ersten Ausgangskontakt (35) der zweiten Gleichrichterschaltung (32) elektrisch verbunden ist, wobei eine Kathode der zweiten Diode (40) der zweiten Gleichrichterschaltung (32) mit dem ersten Eingangskontakt (33) der zweiten Gleichrichterschaltung (32) und eine Anode der zweiten Diode (40) der zweiten Gleichrichterschaltung (32) mit dem zweiten Ausgangskontakt (36) der zweiten Gleichrichterschaltung (32) elektrisch verbunden ist.

7. Gleichspannungsversorgungseinrichtung nach Anspruch 5 oder 6, wobei die erste Gleichrichtereinrichtung (27) einen ersten Kondensator (41) und einen zweiten Kondensator (42) aufweist;
wobei ein erster Kontakt (43) des ersten Kondensators (41) der ersten Gleichrichterschaltung (27) mit dem ersten Ausgangskontakt (30) der ersten Gleichrichterschaltung (27) und ein zweiter Kontakt (44) des ersten Kondensators (41) der ersten Gleichrichterschaltung (27) mit dem zweiten Eingangskontakt (29) der ersten Gleichrichterschaltung (27) elektrisch verbunden ist, wobei ein erster Kontakt (45) des zweiten Kondensators (42) der ersten Gleichrichterschaltung (27) mit dem zweiten Eingangskontakt (29) der ersten Gleichrichterschaltung (27) und ein zweiter Kontakt (46) des zweiten Kondensators (42) der ersten Gleichrichterschaltung (27) mit dem zweiten Ausgangskontakt (31) der ersten Gleichrichterschaltung (27) elektrisch verbunden ist;
wobei die zweite Gleichrichtereinrichtung (32) einen ersten Kondensator (47) und einen zweiten Kondensator (48) aufweist;
wobei ein erster Kontakt (49) des ersten Kondensators (47) der zweiten Gleichrichterschaltung (32) mit dem ersten Ausgangskontakt (35) der zweiten Gleichrichterschaltung (32) und ein zweiter Kontakt (50) des ersten Kondensators (47) der zweiten Gleichrichterschaltung (32) mit dem zweiten Eingangskontakt (34) der zweiten Gleichrichterschaltung (32) elektrisch verbunden ist, wobei ein erster Kontakt (51) des zweiten Kondensators (48) der zweiten Gleichrichterschaltung (32) mit dem zweiten Eingangskontakt (34) der zweiten Gleichrichterschaltung (32) und ein zweiter Kontakt (52) des zweiten Kondensators (48) der zweiten Gleichrichterschaltung (32) mit dem zweiten Ausgangskontakt (36) der zweiten Gleichrichterschaltung (32) elektrisch verbunden ist.

8. Treiberschaltung zum Ansteuern eines ersten Leistungshalbleiters und eines zweiten Leistungshalbleiters, welche in Reihe geschaltet sind, wobei die Treiberschaltung (53) umfasst:
eine Gleichspannungsversorgungseinrichtung (26) nach einem der Ansprüche 5 bis 8;
eine erste Treibereinrichtung (54) zum Ansteuern des ersten Leistungshalbleiters;
eine zweite Treibereinrichtung (55) zum Ansteuern des zweiten Leistungshalbleiters;
wobei ein erster Spannungseingangskontakt (56) der ersten Treibereinrichtung (54) mit dem ersten Ausgangskontakt (30) der ersten Gleichrichterschaltung (27) und ein zweiter Spannungseingangskontakt (57) der ersten Treibereinrichtung (54) mit dem zweiten Ausgangskontakt (31) der ersten Gleichrichterschaltung (27) elektrisch verbunden ist;
wobei ein erster Spannungseingangskontakt (58) der zweiten Treibereinrichtung (55) mit dem ersten Ausgangskontakt (35) der zweiten Gleichrichterschaltung (32) und ein zweiter Spannungseingangskontakt (59) der zweiten Treibereinrichtung (54) mit dem zweiten Ausgangskontakt (36) der zweiten Gleichrichterschaltung (36) elektrisch verbunden ist.

9. Leistungshalbleiterschaltung, wobei die Leistungshalbleiterschaltung (60) umfasst:
einen ersten Leistungshalbleiter (61);
einen zweiten Leistungshalbleiter (62);
eine Treiberschaltung (53) nach vorstehendem Anspruch;
wobei ein erster Schaltkontakt (63) des ersten Leistungshalbleiters (61) mit einem ersten Versorgungsspannungskontakt (64) elektrisch verbunden ist, wobei ein zweiter Schaltkontakt (65) des ersten Leistungshalbleiters (61) mit einem ersten Schaltkontakt (66) des zweiten Leistungshalbleiters (62) elektrisch verbunden ist, wobei ein zweiter Schaltkontakt (67) des zweiten Leistungshalbleiters (62) mit einem zweiten Versorgungsspannungskontakt (68) elektrisch verbunden ist;
wobei ein Schaltausgang (69) der ersten Treibereinrichtung (54) mit einem Steuerkontakt (70) des ersten Leistungshalbleiters (61) und der zweite Eingangskontakt (29) der ersten Gleichrichterschaltung (27) mit dem zweiten Schaltkontakt (65) des ersten Leistungshalbleiters (61) elektrisch verbunden sind;
wobei ein Schaltausgang der zweiten Treibereinrichtung (71) mit einem Steuerkontakt (72) des zweiten Leistungshalbleiters (62) und der zweite Eingangskontakt (34) der zweiten Gleichrichterschaltung (32) mit dem zweiten Schaltkontakt (67) des zweiten Leistungshalbleiters (62) elektrisch verbunden sind.

## Claims

1. Alternating voltage supply means for converting an energy-supplying direct voltage (EGS) to a first alternating voltage (WS1) and to a second alternating voltage (WS2) galvanically separated from the first alternating voltage (WS1), the alternating voltage supply means (1) including:
a first voltage input (2) and a second voltage input (3) for receiving the energy-supplying direct voltage (EGS);
a semiconductor switch (4) comprising a first switching contact (5), a second switching contact (6), and a control contact (7), the second switching contact (6) being electrically connected to the second voltage input (3);
an inductive input element (8) electrically connecting the first voltage input (2) and the first switching contact (5);
an inductive resonant element (9) which electrically connects the first switching contact (5) to a first contact (10) of a first capacitive resonant element (11) of the alternating voltage supply means that is associated with the first alternating voltage (WS1) and to a first contact (12) of a first capacitive resonant element (13) of the alternating voltage supply means (1) that is associated with the second alternating voltage (WS2);
a second capacitive resonant element (14) of the alternating voltage supply means (1), that is associated with the first alternating voltage (WS1), with a first contact (15) electrically connected to the second switching contact (6);
a second capacitive resonant element (16) of the alternating voltage supply means (1), that is associated with the second alternating voltage (WS2), with a first contact (17) electrically connected to the second switching contact (6); and
a feedback means (18, 19, 20) with a third voltage input (18) for receiving a direct reference voltage (RGS) related to the second voltage input (3), with an inductive connection element (19) electrically connecting the third voltage input (18) and the control contact (7), and with a parasitic capacitance (20) connecting the first switching contact (5) and the control contact (7);
wherein the feedback means (18, 19, 20) is configured such that the semiconductor switch (14) oscillates, so that the first alternating voltage (WS1) is applied between a second contact (21) of the first capacitive resonant element (11) associated with the first alternating voltage (WS1) and a second contact (22) of the second capacitive resonant element (14) associated with the first alternating voltage (WS1), and so that the second alternating voltage (WS2) is applied between a second contact (23) of the first capacitive resonant element (13) associated with the second alternating voltage (WS2) and a second contact (24) of the second capacitive resonant element (16) associated with the second alternating voltage (WS2).

2. Alternating voltage supply means as claimed in the previous claim, wherein the first capacitive resonant element (11) associated with the first alternating voltage (WS1) and/or the second capacitive resonant element (14) associated with the first alternating voltage (WS1) and/or the first capacitive resonant element (13) associated with the second alternating voltage (WS2) and/or the second capacitive resonant element (16) associated with the second alternating voltage (WS2) exhibit a capacitance lower than a parasitic capacitance (25) that is present between the first switching contact (5) and the second switching contact (6).

3. Alternating voltage supply means as claimed in any of the previous claims, wherein the first capacitive resonant element (11) associated with the first alternating voltage (WS1), the second capacitive resonant element (14) associated with the first alternating voltage (WS1), the first capacitive resonant element (13) associated with the second alternating voltage (WS2), and the second capacitive resonant element (16) associated with the second alternating voltage (WS2) exhibit a same capacitance.

4. Alternating voltage supply means as claimed in any of the previous claims, wherein the first capacitive resonant element (11) associated with the first alternating voltage (WS1), and/or the second capacitive resonant element (14) associated with the first alternating voltage (WS1), and/or the first capacitive resonant element (13) associated with the second alternating voltage (WS2), and/or the second capacitive resonant element (16) associated with the second alternating voltage (WS2) are configured as capacitive structures of a circuit board.

5. Direct voltage supply means for converting an energy-supplying direct voltage (EGS) to a first direct voltage (GS1) and to a second direct voltage (GS2) galvanically separated from the first direct voltage (GS1), the direct voltage supply means (26) including:
an alternating voltage supply means (1) as claimed in any of the previous claims;
a first rectifier means (27) for rectifying the first alternating voltage (WS1), wherein a first input contact (28) of the first rectifier means (27) is electrically connected to the second contact (21) of the first capacitive resonant element (11) associated with the first alternating voltage (WS1), wherein a second input contact (29) of the first rectifier means (27) is electrically connected to the second contact (22) of the second capacitive resonant element (14) associated with the first alternating voltage (WS1), and wherein the first direct voltage (GS1) is applied between a first output contact (30) of the first rectifier means (27) and a second output contact (31) of the first rectifier means (27); and
a second rectifier means (32) for rectifying the second alternating voltage (WS2), wherein a first input contact (33) of the second rectifier means (32) is electrically connected to the second contact (23) of the first capacitive resonant element (13) associated with the second alternating voltage (WS2), wherein a second input contact (34) of the second rectifier means (32) is electrically connected to the second contact (24) of the second capacitive resonant element (16) associated with the second alternating voltage (WS2), and wherein the second direct voltage (GS2) is applied between a first output contact (35) of the second rectifier means (32) and a second output contact (36) of the second rectifier means (32).

6. Direct voltage supply means as claimed in the previous claim, wherein the first rectifier means (27) comprises a first diode (37) and a second diode (38);
wherein an anode of the first diode (37) of the first rectifier circuit (27) is electrically connected to the first input contact (28) of the first rectifier circuit (27), and a cathode of the first diode (37) of the first rectifier circuit (27) is electrically connected to the first output contact (30) of the first rectifier circuit (27), wherein a cathode of the second diode (38) of the first rectifier circuit (27) is electrically connected to the first input contact (30) of the first rectifier circuit (27), and an anode of the second diode (38) of the first rectifier circuit (27) is electrically connected to the second output contact (31) of the first rectifier circuit (27); wherein the second rectifier means (32) comprises a first diode (39) and a second diode (40);
wherein an anode of the first diode (39) of the second rectifier circuit (32) is electrically connected to the first input contact (33) of the second rectifier circuit (37), and a cathode of the first diode (39) of the second rectifier circuit (32) is electrically connected to the first output contact (35) of the second rectifier circuit (32), wherein a cathode of the second diode (40) of the second rectifier circuit (32) is electrically connected to the first input contact (33) of the second rectifier circuit (32), and an anode of the second diode (40) of the second rectifier circuit (32) is electrically connected to the second output contact (36) of the second rectifier circuit (32).

7. Direct voltage supply means as claimed in claims 5 or 6, wherein the first rectifier means (27) comprises a first capacitor (41) and a second capacitor (42);
wherein a first contact (43) of the first capacitor (41) of the first rectifier circuit (27) is electrically connected to the first output contact (30) of the first rectifier circuit (27), and a second contact (44) of the first capacitor (41) of the first rectifier circuit (27) is electrically connected to the second input contact (29) of the first rectifier circuit (27), wherein a first contact (45) of the second capacitor (42) of the first rectifier circuit (27) is electrically connected to the second input contact (29) of the first rectifier circuit (27), and a second contact (46) of the second capacitor (42) of the first rectifier circuit (27) is electrically connected to the second output contact (31) of the first rectifier circuit (27);
wherein the second rectifier means (32) comprises a first capacitor (47) and a second capacitor (48);
wherein a first contact (49) of the first capacitor (47) of the second rectifier circuit (32) is electrically connected to the first output contact (35) of the second rectifier circuit (32), and a second contact (50) of the first capacitor (47) of the second rectifier circuit (32) is electrically connected to the second input contact (34) of the second rectifier circuit (32), wherein a first contact (51) of the second capacitor (48) of the second rectifier circuit (32) is electrically connected to the second input contact (34) of the second rectifier circuit (32), and a second contact (52) of the second capacitor (48) of the second rectifier circuit (32) is electrically connected to the second output contact (36) of the second rectifier circuit (32).

8. Driver circuit for controlling a first power semiconductor and a second power semiconductor connected in series, the driver circuit (53) including:
a direct voltage supply means (26) as claimed in any of claims 5 to 8;
a first driver means (54) for controlling the first power semiconductor;
a second driver means (55) for controlling the second power semiconductor;
wherein a first voltage input contact (56) of the first driver means (54) is electrically connected to the first output contact (30) of the first rectifier circuit (27), and a second voltage input contact (57) of the first driver means (54) is electrically connected to the second output contact (31) of the first rectifier circuit (27);
wherein a first voltage input contact (58) of the second driver means (55) is electrically connected to the first output contact (35) of the second rectifier circuit (32), and a second voltage input contact (59) of the second driver means (54) is electrically connected to the second output contact (36) of the second rectifier circuit (36).

9. Power semiconductor circuit, said power semiconductor circuit (60) including:
a first power semiconductor (61);
a second power semiconductor (62);
a driver circuit (53) as claimed in the previous claim;
wherein a first switching contact (63) of the first power semiconductor (61) is electrically connected to a first supply voltage contact (64), wherein a second switching contact (65) of the first power semiconductor (61) is electrically connected to a first switching contact (66) of the second power semiconductor (62), wherein a second switching contact (67) of the second power semiconductor (62) is electrically connected to a second supply voltage contact (68);
wherein a switching output (69) of the first driver means (54) is electrically connected to a control contact (70) of the first power semiconductor (61), and the second input contact (29) of the first rectifier circuit (27) is electrically connected to the second switching contact (65) of the first power semiconductor (61);
wherein a switching output of the second driver means (71) is electrically connected to a control contact (72) of the second power semiconductor (62), and the second input contact (34) of the second rectifier circuit (32) is electrically connected to the second switching contact (67) of the second power semiconductor (62).

## Revendications

1. Dispositif d'alimentation en tension alternative pour convertir une tension continue d'alimentation en énergie (EGS) en une première tension alternative (WS1) et en une deuxième tension alternative (WS2) séparée galvaniquement de la première tension alternative (WS1), le dispositif d'alimentation en tension alternative (1) comportant:
une première entrée de tension (2) et une deuxième entrée de tension (3) destinées à recevoir la tension continue d'alimentation en énergie (EGS);
un commutateur à semi-conducteur (4) avec un premier contact de commutation (5), un deuxième contact de commutation (6) et un contact de commande (7), le deuxième contact de commutation (6) étant connecté électriquement à la deuxième entrée de tension (3);
un élément d'entrée inductif (8) qui connecte électriquement la première entrée de tension (2) et le premier contact de commutation (5);
un élément de résonance inductif (9) qui connecte électriquement le premier contact de commutation (5) à un premier contact (10) d'un premier élément de résonance capacitif (11), associé à la première tension alternative (WS1), du dispositif d'alimentation en tension alternative (1) et à un premier contact (12) d'un premier élément de résonance capacitif (13), associé à la deuxième tension alternative (WS2), du dispositif d'alimentation en tension alternative (1);
un deuxième élément de résonance capacitif (14), associé à la première tension alternative (WS1), du dispositif d'alimentation en tension alternative (1) avec un premier contact (15) qui est connecté électriquement au deuxième contact de commutation (6);
un deuxième élément de résonance capacitif (16), associé à la deuxième tension alternative (WS2), du dispositif d'alimentation en tension alternative (1) avec un premier contact (17) qui est connecté électriquement au deuxième contact de commutation (6); et
un moyen de rétroaction (18, 19, 20) avec une troisième entrée de tension (18) destinée à recevoir une tension continue de référence (RGS) en rapport avec la deuxième entrée de tension (3), avec un élément de connexion inductif (19) qui connecte électriquement la troisième entrée de tension (18) et le contact de commande (7), et avec une capacité parasite (20) qui connecte le premier contact de commutation (5) au contact de commande (7);
le moyen de rétroaction (18, 19, 20) étant conçu de sorte que le commutateur à semi-conducteur (4) oscille, de sorte que la première tension alternative (WS1) soit appliquée entre un deuxième contact (21) du premier élément de résonance capacitif (11) associé à la première tension alternative (WS1) et un deuxième contact (22) du deuxième élément de résonance capacitif (14) associé à la première tension alternative (WS1) et de sorte que la deuxième tension alternative (WS2) soit appliquée entre un deuxième contact (23) du premier élément de résonance capacitif (13) associé à la deuxième tension alternative (WS2) et un deuxième contact (24) du deuxième élément de résonance capacitif (16) associé à la deuxième tension alternative (WS2).

2. Dispositif d'alimentation en tension alternative selon la revendication précédente, dans lequel le premier élément de résonance capacitif (11) associé à la première tension alternative (WS1) et/ou le deuxième élément de résonance capacitif (14) associé à la première tension alternative (WS1) et/ou le premier élément de résonance capacitif (13) associé à la deuxième tension alternative (WS2) et/ou le deuxième élément de résonance capacitif (16) associé à la deuxième tension alternative (WS2) présentent une capacité inférieure à une capacité parasite (25) entre le premier contact de commutation (5) et le deuxième contact de commutation (6).

3. Dispositif d'alimentation en tension alternative selon l'une des revendications précédentes, dans lequel le premier élément de résonance capacitif (11) associé à la première tension alternative (WS1), le deuxième élément de résonance capacitif (14) associé à la première tension alternative (WS1), le premier élément de résonance capacitif (13) associé à la deuxième tension alternative (WS2) et le deuxième élément de résonance capacitif (16) associé à la deuxième tension alternative (WS2) présentent la même capacité.

4. Dispositif d'alimentation en tension alternative selon l'une des revendications précédentes, dans lequel le premier élément de résonance capacitif (11) associé à la première tension alternative (WS1) et/ou le deuxième élément de résonance capacitif (14) associé à la première tension alternative (WS1) et/ou le premier élément de résonance capacitif (13) associé à la deuxième tension alternative (WS2) et/ou le deuxième élément de résonance capacitif (16) associé à la deuxième tension alternative (WS2) sont conçus comme des structures capacitives d'une carte de circuit imprimé.

5. Dispositif d'alimentation en tension continue pour convertir une tension continue d'alimentation en énergie (EGS) en une première tension continue (GS1) et en une deuxième tension continue (GS2) séparée galvaniquement de la première tension continue (GS1), le dispositif d'alimentation en tension continue (26) comprenant:
un dispositif d'alimentation en tension alternative (1) selon l'une des revendications précédentes;
un premier moyen de redressement (27) destiné à redresser la première tension alternative (WS1), où un premier contact d'entrée (28) du premier moyen de redressement (27) est connecté électriquement au deuxième contact (21) du premier élément de résonance capacitif (11) associé à la première tension alternative (WS1), où un deuxième contact d'entrée (29) du premier moyen de redressement (27) est connecté électriquement au deuxième contact (22) du deuxième élément de résonance capacitif (14) associé à la première tension alternative (WS1), et où la première tension continue (GS1) est appliquée entre un premier contact de sortie (30) du premier moyen de redressement (27) et un deuxième contact de sortie (31) du premier moyen de redressement (27); et
un deuxième moyen de redressement (32) destiné à redresser la deuxième tension alternative (WS2), où un premier contact d'entrée (33) du deuxième moyen de redressement (32) est connecté électriquement au deuxième contact (23) du premier élément de résonance capacitif (13) associé à la deuxième tension alternative (WS2), où un deuxième contact d'entrée (34) du deuxième moyen de redressement (32) est connecté électriquement au deuxième contact (24) du deuxième élément de résonance capacitif (16) associé à la deuxième tension alternative (WS2), et où la deuxième tension continue (GS2) est appliquée entre un premier contact de sortie (35) du deuxième moyen de redressement (32) et un deuxième contact de sortie (36) du deuxième moyen de redressement (32).

6. Dispositif d'alimentation en tension continue selon la revendication précédente, dans lequel le premier moyen de redressement (27) présente une première diode (37) et une deuxième diode (38);
dans lequel une anode de la première diode (37) du premier circuit redresseur (27) est connectée électriquement au premier contact d'entrée (28) du premier circuit redresseur (27) et une cathode de la première diode (37) du premier circuit redresseur (27) est connectée électriquement au premier contact de sortie (30) du premier circuit redresseur (27), dans lequel une cathode de la deuxième diode (38) du premier circuit redresseur (27) est connectée électriquement au premier contact d'entrée (30) du premier circuit redresseur (27) et une anode de la deuxième diode (38) du premier circuit redresseur (27) est connectée électriquement au deuxième contact de sortie (31) du premier circuit redresseur (27);
dans lequel le deuxième moyen de redressement (32) présente une première diode (39) et une deuxième diode (40);
dans lequel une anode de la première diode (39) du deuxième circuit redresseur (32) est connectée électriquement au premier contact d'entrée (33) du deuxième circuit redresseur (37) et une cathode de la première diode (39) du deuxième circuit redresseur (32) est connectée électriquement au premier contact de sortie (35) du deuxième circuit redresseur (32), dans lequel une cathode de la deuxième diode (40) du deuxième circuit redresseur (32) est connectée électriquement au premier contact d'entrée (33) du deuxième circuit redresseur (32) et une anode de la deuxième diode (40) du deuxième circuit redresseur (32) est connectée électriquement au deuxième contact de sortie (36) du deuxième circuit redresseur (32).

7. Dispositif d'alimentation en tension continue selon la revendication 5 ou 6, dans lequel le premier moyen de redressement (27) présente un premier condensateur (41) et un deuxième condensateur (42);
dans lequel un premier contact (43) du premier condensateur (41) du premier circuit redresseur (27) est connecté électriquement au premier contact de sortie (30) du premier circuit redresseur (27) et un deuxième contact (44) du premier condensateur (41) du premier circuit redresseur (27) est connecté électriquement au deuxième contact d'entrée (29) du premier circuit redresseur (27), dans lequel un premier contact (45) du deuxième condensateur (42) du premier circuit redresseur (27) est connecté électriquement au deuxième contact d'entrée (29) du premier circuit redresseur (27) et un deuxième contact (46) du deuxième condensateur (42) du premier circuit redresseur (27) est connecté électriquement au deuxième contact de sortie (31) du premier circuit redresseur (27);
dans lequel le deuxième moyen de redressement (32) présente un premier condensateur (47) et un deuxième condensateur (48);
dans lequel un premier contact (49) du premier condensateur (47) du deuxième circuit redresseur (32) est connecté électriquement au premier contact de sortie (35) du deuxième circuit redresseur (32) et un deuxième contact (50) du premier condensateur (47) du deuxième circuit redresseur (32) est connecté électriquement au deuxième contact d'entrée (34) du deuxième circuit redresseur (32), dans lequel un premier contact (51) du deuxième condensateur (48) du deuxième circuit redresseur (32) est connecté électriquement au deuxième contact d'entrée (34) du deuxième circuit redresseur (32) et un deuxième contact (52) du deuxième condensateur (48) du deuxième circuit redresseur (32) est connecté électriquement au deuxième contact de sortie (36) du deuxième circuit redresseur (32).

8. Circuit pilote pour commander un premier semi-conducteur de puissance et un deuxième semi-conducteur de puissance qui sont connectés en série, le circuit pilote (53) comportant:
un dispositif d'alimentation en tension continue (26) selon l'une des revendications 5 à 8;
un premier moyen pilote (54) destiné à commander le premier semi-conducteur de puissance;
un deuxième moyen pilote (55) destiné à commander le deuxième semi-conducteur de puissance;
dans lequel un premier contact d'entrée de tension (56) du premier moyen pilote (54) est connecté électriquement au premier contact de sortie (30) du premier circuit redresseur (27) et un deuxième contact d'entrée de tension (57) du premier moyen pilote (54) est connecté électriquement au deuxième contact de sortie (31) du premier circuit redresseur (27);
dans lequel un premier contact d'entrée de tension (58) du deuxième moyen pilote (55) est connecté électriquement au premier contact de sortie (35) du deuxième circuit redresseur (32) et un deuxième contact d'entrée de tension (59) du deuxième moyen pilote (54) est connecté électriquement au deuxième contact de sortie (36) du deuxième circuit redresseur (36).

9. Circuit semi-conducteur de puissance, le circuit semi-conducteur de puissance (60) comportant:
un premier semi-conducteur de puissance (61);
un deuxième semi-conducteur de puissance (62);
un circuit pilote (53) selon la revendication précédente;
dans lequel un premier contact de commutation (63) du premier semi-conducteur de puissance (61) est connecté électriquement à un premier contact de tension d'alimentation (64), dans lequel un deuxième contact de commutation (65) du premier semi-conducteur de puissance (61) est connecté électriquement à un premier contact de commutation (66) du deuxième semi-conducteur de puissance (62), dans lequel un deuxième contact de commutation (67) du deuxième semi-conducteur de puissance (62) est connecté électriquement à un deuxième contact de tension d'alimentation (68);
dans lequel une sortie de commutation (69) du premier moyen pilote (54) est connectée électriquement à un contact de commande (70) du premier semi-conducteur de puissance (61) et le deuxième contact d'entrée (29) du premier circuit redresseur (27) est connecté électriquement au deuxième contact de commutation (65) du premier semi-conducteur de puissance (61);
dans lequel une sortie de commutation du deuxième moyen pilote (71) est connectée électriquement à un contact de commande (72) du deuxième semi-conducteur de puissance (62) et le deuxième contact d'entrée (34) du deuxième circuit redresseur (32) est connecté électriquement au deuxième contact de commutation (67) du deuxième semi-conducteur de puissance (62).
